# EUROPEAN PATENT APPLICATION

(11) **EP 1 752 766 A1**
(43) Date of publication of application: **14.02.2007**
(21) Application number: 06253810.3
(22) Date of filing: 20.07.2006
(51) Int. Cl.: G01N 30/72, B01D 15/24

(54) **Concentration techniques in chromatographic separation**

(30) Priority: 10.08.2005 US 200709
(71) Applicant: Agilent Technologies, Inc., Santa Clara, CA 95051 (US)
(72) Inventor: Ji, Zhenghua, Loveland, Colorado 80537-0599 (US); Boyes, Barry E., Loveland, Colorado 80537-0599 (US)
(74) Representative: Dunne, Emma Louise

(57) **Abstract**

Apparatus and methods are disclosed for concentrating one or more components in a fluid effluent, which comprises fractions comprising separated components of interest. The fluid effluent is passed through a concentration device (16) comprising a hollow element (20) comprising a wall at least a portion of which is porous wherein the hollow element is disposed in the interior of a hollow liner (22). Fluid effluent molecules are permitted to permeate through the wall of the hollow element so that component molecules are concentrated in remaining effluent, which exits the concentration device. The component or components may then be detected.

## Description

The present invention relates to methods of concentrating and/or analyzing one or more components in a sample or fluid effluent and apparatus for the same.

The clinical diagnostic field has seen a broad expansion in recent years, both as to the variety of materials of interest that may be readily and accurately determined, as well as the methods for the determination. Convenient, reliable and non-hazardous means for detecting the presence of low concentrations of materials in liquids is desired. In clinical chemistry these materials may be present in body fluids in concentrations below 10⁻¹² molar. The difficulty of detecting the presence of these materials in low concentrations, as well as the confidence in their detection, are enhanced by the relatively small sample sizes that can be utilized.

In recent years, techniques have been developed for the analysis or determination of organic compounds present in extremely small quantities or at very low concentrations. For example, by combining chromatographic techniques such as liquid chromatography with various detection means such as mass spectrometry, sensitivity in the detection of analytes is enhanced.

Although liquid chromatography provides a powerful chromatographic separation for a complex mixture of components in a sample, there is always a need for additional approaches. Separated components are concentrated in respective fractions of eluate from the liquid chromatograph. In typical liquid chromatography where the sample size is small, for example, microgram levels, the mobile phase flow is about 1 milliliter per minute, and the peak width is about 0.2 minutes, the resulting concentration of the separated component in the eluate fraction is about 10 parts per million (ppm). For a trace level analysis, the level of concentration of the component in the eluate is on the order of parts per billion (ppb) or parts per trillion (ppt). These low concentration levels of the component in the eluate present challenges for detection technology. For example, in liquid chromatography-mass spectrometry detection techniques, low levels of concentration of component in the eluate affect electrospray efficiency and minimum detection level.

Many technologies have been developed to improve the low detection limit or instrumentation sensitivity. Among these technologies are nanoflow LC column, sample pre-concentration, post-concentration during the end of chromatographic separation, evaporative light scattering detector (ELVD), and the like.

There remains a need to perform separation and/or detection of components of interest with good detection limits and sensitivity.

Aspects of this invention relate to the separation or detection of components of interest and in some aspects to the separation and detection of components of interest. In some aspects the invention relates to the fields of chromatography and spectrometry for the analysis of components of interest.

According to a first aspect of the present invention, there is provided a method of concentrating one or more components of interest in a fluid effluent, which comprises:
(a) passing fluid effluent comprising fractions comprising separated components of interest through a concentration device comprising a hollow element comprising a wall at least a portion of which is porous wherein the hollow element is disposed in the interior of a hollow liner, and
(b) permitting fluid effluent molecules to permeate through the wall of the hollow element so that component molecules are concentrated in remaining effluent, which exits the concentration device.

According to a second aspect of the present invention, there is provided a method for analyzing for one or more components in a fluid effluent. The method comprises:
(a) subjecting a medium comprising the sample to liquid chromatographic separation to obtain separated components wherein each of the separated components is present in liquid effluent,
(b) passing the liquid effluent into an interior region of a hollow fiber wherein the hollow fiber is disposed parallel axially in the interior of a hollow liner to form a gap region,
(c) permitting liquid effluent molecules to permeate through the wall of the hollow fiber from the interior region to the gap region wherein molecules of component are concentrated in remaining effluent, which moves through and out of the interior region.

In some embodiments the liquid effluent molecules pass from the interior surface of the hollow element into the gap region. In some embodiments the hollow element is a hollow fiber. In some embodiments the method also comprises adding an internal standard to the remaining liquid effluent in the interior region of the hollow element. In some embodiments the fractions of effluent are obtained by subjecting a medium comprising the mixture of one or more components to chromatographic separation to obtain fractions of effluent comprising separated components, which are passed into the hollow element as discussed above.

According to a third aspect of the present invention, there is provided a method for analyzing for components in a sample. A medium comprising the sample is subjected to liquid chromatographic separation to obtain separated components. Each of the separated components is present in liquid effluent, which is passed into an interior region of a hollow fiber. The hollow fiber is disposed parallel axially in the interior of a hollow liner to form a gap region. The liquid effluent molecules are permitted to permeate through the wall of the hollow fiber from the interior region to the gap region wherein components are concentrated in remaining effluent, which moves through and out of the interior region. Each component is detected, for example, by mass spectrometry. In some embodiments the method further comprises adding an internal standard to the remaining liquid effluent in the interior region of the hollow fiber. In some embodiments at least a portion of the interior region comprises a particulate chromatographic medium.

Another embodiment of the present invention is an apparatus for analyzing a sample containing biomolecules of interest. The apparatus comprises (a) a separation device for separating the biomolecules, (b) a concentration device in fluid communication with the separation device, the concentration device comprising a hollow element disposed in a non-porous hollow liner to provide a gap region therebetween wherein the hollow element comprises a wall having an exterior surface and an interior surface defining an interior region and wherein at least a portion of the wall is porous, and (c) a detection device in fluid communication with the interior region of the concentration device. In some embodiments, the hollow element is a hollow fiber. In some embodiments the hollow element is disposed in the hollow liner in a parallel axially manner. In some embodiments at least a portion of the interior region of the hollow element comprises a particulate chromatographic medium.

Preferred embodiments will now be described by way of example only and with reference to the drawings in which:
Fig. 1 is a schematic depicting an embodiment of an apparatus in accordance with certain embodiments of the present invention.
Fig 2A is the cross section view of the hollow fiber inside a hollow liner.
Fig 2B is the cross section view of a bundle of hollow fibers inside a hollow liner.
The figures are not to scale and some features may be exaggerated for the purpose of illustrating certain aspects or embodiments of the present invention.
Aspects of the present invention relate to apparatus and methods for concentrating separated components of interest. Other aspects of the invention relate to separating or detecting (where "or" includes both "and" and "or") components of interest from one another, concentrating the separated components of interest in fractions comprising respective separated components of interest, and detecting the separated components of interest. Some embodiments of the present invention relate to methods for, and apparatus for, analyzing for one or more components of interest in a fluid effluent comprising the components.

### Components to be Concentrated

Components of interest include components that relate to synthetic chemistry, to the diagnostics and purification of biotechnological products and so forth. The components may be large molecules or small molecules as discussed herein below.

For the most part, the large molecules include poly(amino acids), e.g., proteins, large peptides, polysaccharides, hormones, nucleic acids, soluble polymers, and so forth. The large molecules generally have a molecular weight of at least about 5,000, more usually at least about 10,000. In the poly(amino acid), polysaccharide or nucleic acid category, the molecules are generally from about 5,000 to 5,000,000 molecular weight, more usually from about 20,000 to 1,000,000 molecular weight. In the hormone category, the molecular weights usually range from about 5,000 to 60,000.

The small molecules are generally of molecular weight less than about 5,000, more usually less than about 2000 and include haptens, which are molecules that are not immunogenic by themselves but can be rendered immunogenic by being attached to a large molecule. Usually, the lower molecular weight or small molecules are generally of from about 100 to 2,000 molecular weight, more usually from 125 to 1,000 molecular weight (MW). The small molecules include drugs including drugs of abuse and therapeutic drugs, nutritional materials, metabolites, environmental pollutants such as, e.g., pesticides, herbicides, insecticides, and the like, other pollutants, dyes, lower molecular weight peptides, oligonucleotides, modified nucleotides, modified oligonucleotides and so forth.

In some embodiments the components of interest have a molecular weight of about 50 to about 10,000, about 75 to about 5000, about 100 to about 1000, and so forth.

Metabolites related to diseased states include spermine, galactose, phenylpyruvic acid, and porphyrin Type 1. Among pesticides are polyhalogenated biphenyls, phosphate esters, thiophosphates, carbamates, polyhalogenated sulfenamides, their metabolites and derivatives.

Particular examples of components of interest include oligonucleotides and modified oligonucleotides, polynucleotides including modified polynucleotides, proteins such as, e.g., immunoglobulins (antibodies), cytokines, enzymes, hormones, antigens (e.g., cancer antigens, tissue specific antigens, etc., nutritional markers, and so forth, drugs of abuse, therapeutic drugs, peptides, pollutants, pesticides, other haptens of interest, and the like.

The components of interest may be, for example, a biomolecule found directly in a sample such as biological tissue, including body fluids, from a host, waste effluents and so forth or fragments of larger molecules such as biopolymers. The components of interest may be biomolecules or molecules of interest in biology, which may be, for example, biopolymers or fragments thereof.

The term "biopolymer" refers to a polymer of one or more types of repeating units. Biopolymers are typically found in biological systems and particularly include polysaccharides (such as carbohydrates), and polypeptides (which term is used to include proteins whether or not attached to a polysaccharide) and polynucleotides as well as their analogs such as those compounds composed of or containing amino acid analogs or non-amino acid groups, or nucleotide analogs or non-nucleotide groups. Biopolymers include, for example, polynucleotides, polypeptides, polysaccharides and the like mentioned above and combinations thereof.

The components of interest may be found in samples, which may be a body fluid or a non-body fluid. When necessary, the sample may be pretreated with reagents to liquefy the sample and release components of interest such as nucleic acids from binding substances. Other samples may be treated to fragment larger molecules into smaller components of interest. Such pretreatments and fragmentation methods are well known in the art.

The phrase "body fluid" refers to any biological fluid obtained from the body of a mammal (e.g., human, monkey, mouse, rat, rabbit, dog, cat, sheep, cow, pig, and the like) that is suspected of containing a particular target protein or proteins to be detected. Body fluids include, for example, whole-blood, plasma, serum, interstitial fluid, sweat, saliva, urine, semen, blister fluid, inflammatory exudates, stool, sputum, cerebral spinal fluid, tears, mucus, lymphatic fluid, vaginal mucus, and the like; collection fluids used to collect proteins from protein-containing materials such as biological tissue and the like, and so forth. The biological tissue includes excised tissue from an organ or other body part of a host, e.g., tissue biopsies; hair and skin; and so forth.

The phrase "non-body fluid" refers to any fluid not obtained from the body of a mammal, which is suspected of containing a particular target protein or proteins to be detected. Exemplary non-body fluids include dialysate, cultures of mammalian and non-mammalian cells, microorganisms, viruses, yeast, fungi, and the like, plants, insects, aquatic organisms, food, forensic samples such as paper, fabrics and scrapings, water, sewage, medicinals, etc.

As used herein, a "polynucleotide" refers to a biopolymer that comprises more than about 100 consecutive nucleotides or modified nucleotides. Polynucleotides include DNA, RNA, m-RNA, r-RNA, t-RNA, cDNA, DNA-RNA duplexes, etc.

As used herein, "oligonucleotide" refers to a biomolecule comprising fewer than about 100 nucleotides or modified nucleotides.

As used herein, a "polypeptide" refers to a biopolymer that comprises more than 20 consecutive amino acids. The term "polypeptide" encompasses proteins, fragments of proteins, cleaved forms of proteins, partially digested proteins, which are greater than about 20 consecutive amino acids, and the like.

As used herein a "peptide" refers to a biomolecule comprising fewer than about 20 consecutive amino acids.

Some embodiments of the present methods are directed to the analysis of protein fragments. The protein may be obtained from intact cells, intact viruses, viral infected cells, lysates, plasmids, mitochondria or other organelles, fractionated samples, or other aggregation of proteins, separated proteins, and treated proteins, by themselves or in conjunction with other compounds. Any source of a mixture of proteins can be used, where there is an interest in identifying a plurality of proteins. Protein analytes may be isolated using precipitation, extraction, and chromatography. The proteins may be present as individual proteins or combined in various aggregations, such as organelles, cells, viruses, etc. Protein analytes may be released from cells, for example, by lysing the cells. Proteins may be digested into smaller fragments by enzymatic digestion using enzymes such as, for example, proteases and the like.

One area of application of embodiments of the present invention is proteomics. A proteome is defined as the totality of all the proteins of one cell type under precisely defined boundary conditions. Because higher life forms contain several hundred types of cells, there are also hundreds of proteomes. At the same time, there are proteins that are common to all the cell types of a particular entity, and those that are specific to one type of cell. The proteome, moreover, is not unchangeable, being modified both qualitatively and quantitatively with boundary conditions such as age, or stress on the cell community resulting from the administration of medication.

Of special interest are the proteins of a proteome that are not yet known, both for their application as pharmaceutical target proteins and also as possible independent active substances, i.e., proteins suitable for pharmaceutical use. Also of great value for understanding the function of cell communities are those proteins whose quantity changes when the cell community is stressed, such as through age, the administration of medicine, or diseases.

It is estimated that mammals possess well over 100,000 proteins, whose structural plans are to be found in somewhere between 30,000 to 40,000 genes. There are estimates that indicate that from one gene alone, the process of "splicing" gives rise, as a statistical average, to about three and a half different types of protein. Furthermore, many more proteins are created through post-translational modifications. A proteome contains from some thousands up to some tens of thousands of proteins. Not even half the human proteins are known today.

Other applications of embodiments of the present invention in the area of proteins include, for example, protein sequencing, analysis of post-translational modifications, quality control of therapeutic and other protein preparations, antibody preparation including purification, and the like.

Other areas of application of embodiments of the present invention include genomics, which may be described as the comprehensive analysis of DNA structure and function. Understanding biological diversity at the whole genome level will yield insight into the origins of individual traits and disease susceptibility. Though organisms such as humans are quite similar at the genetic level, differences exist at a frequency of about one in every 1000 nucleotide bases. This translates into approximately 3 million base differences between each individual. Such changes are referred to as single nucleotide polymorphisms (SNP's) and a significant effort is now underway in the research community to map the individual SNP's in humans and other organisms. SNP's may be found within gene coding regions or in non-coding regions. Their effects may be subtle yielding slight changes in protein function or profound, leading to the development of disease. A polymorphism is distinct from a mutation. The latter is considered rare, affecting less than one percent of the species, whereas a polymorphism is relatively common and its prevalence is no different to what is considered normal.

Another area of application of the present methods is the study and analysis of polysaccharides or carbohydrates as they relate to biological processes. Carbohydrates are the most abundant class of organic compounds found in living organisms. They originate as products of photosynthesis, an endothermic reductive condensation of carbon dioxide requiring light energy and the pigment chlorophyll. As noted here, the formulas of many carbohydrates can be written as carbon hydrates, Cₙ(H₂O)ₙ, hence their name. The carbohydrates are a major source of metabolic energy, both for plants and for animals that depend on plants for food. Aside from the sugars and starches that meet this vital nutritional role, carbohydrates also serve as a structural material (cellulose), a component of the energy transport compound ATP, recognition sites on cell surfaces, and one of three essential components of DNA and RNA.

### Separation of Components Prior to Concentration

Embodiments of the present invention are applied to components of interest that have been separated from one another and are present in respective fluid fractions, each having a different separated component of interest. Usually, the fluid fractions are liquid media comprising a separated component. For example, the fluid fraction may be an eluate or effluent from a chromatographic separation to which a medium comprising a mixture of one or more components was subjected. The resulting material from the chromatographic separation comprises the separated components wherein each of the separated components is present in fluid or liquid effluent.

The liquid medium containing the components of interest may be aqueous or non-aqueous or mixtures thereof. An aqueous medium may be solely water or may include from 0.01 to 80 or more volume percent of a cosolvent such as an organic solvent (in some embodiments containing from one to 15 carbon atoms, or 2 to 10 carbon atoms), for example, an alcohol, an ether, an amide, and the like and mixtures thereof. Non-aqueous media include, for example, hydrocarbons, halogenated hydrocarbons, and the like (in some embodiments containing from one to 15 carbon atoms, or 2 to 10 carbon atoms) and mixtures thereof. The liquid effluent usually comprises the liquid medium and any other fluid used as a mobile phase in the separation technique employed. For example, for a typical LC chromatography, a normal phase liquid effluent comprises hexane: methylene chloride: methanol: N,N-diisopropylethylamine (80:19:0.2:0.7:0.1 vol/vol), or a reverse phase liquid effluent comprises 0.1% formic acid in water (vol/vol):acetonitrile: methanol (70:25:5 vol/vol), and the like. The polarity of the liquid effluent or the mobile phase determines separation as normal phase (organic dominant) or reverse phase (aqueous dominant).

Chromatography is a method of separating mixtures of compounds into their components. It enables one to separate trace impurities or major fractions from each other. These separated components can then be analyzed by various methods, including spectrographic methods.

Chromatography is based on the separation of different types of components as they pass along a chromatographic material usually confined in a housing such as a column. The housing may be packed with a material that provides a high surface area, e.g., packed column, or the material may be present as film coated on the walls of the internal walls of the housing, e.g., open tubular column. The packing or wall-coated film of inert material acts as a stationary phase. The chromatographic material is a material that exhibits attractive selectivity for certain compounds. The chromatographic material may interact physically with the compounds being analyzed. As a sample of multi-component mixture to be analyzed passes along the chromatographic material, it separates into its different components, which can then be characterized and identified. This approach can also be used to measure how much of each component is present in the mixture.

Numerous chromatographic techniques may be employed to obtain one or more fluid fractions, each containing a separated component of interest. In some instances, the fluid fraction may contain more than one separated component of interest if subsequent detection can differentiate between the separated components or if detection of the mixture of separated components is sufficient for the analysis being conducted. The chromatographic techniques are well known in the art.

As mentioned above, liquid chromatography (LC) is a well-known technique for separating constituent elements or components of interest in a given sample. Liquid chromatography is classified depending on the principle of the separation into reverse phase and normal phase chromatography, ion-exchange chromatography, partition chromatography, adsorption chromatography, gel permeation chromatography, affinity chromatography or the like. Also, it is classified depending on the method of the operation into downward flow method, upward flow method, high performance liquid chromatography or the like.

In a conventional LC system, a liquid solvent (sometimes referred to as the "mobile phase") is introduced from a reservoir and is pumped through the LC system. The mobile phase exits the pump under pressure. The mobile phase then travels via tubing to a sample injection valve. As the name suggests, the sample injection valve allows an operator to inject a sample into the LC system, where the sample will be carried along with the mobile phase.

Another important part of an LC system is the column. A typical column usually consists of a piece of tubing such as, for example, stainless steel tubing, glass-lined stainless steel tubing, extruded hollow rods or tubing made of polymer polyetheretherketone (PEEK), a PEEK hollow rod surrounded by an aluminum jacket, and the like.

The column is packed with a "packing" material. The packing comprises a particulate chromatographic material packed inside the column. The packing may comprise or consist of silica- or polymer-based particles, which are often chemically bonded with a chemical functionality. As conventional column packings for LC and HPLC, besides silica gel, modified silica gels in which silica gel is modified with an organic group such as, for example, an alkyl group of about 4 to about 30 C atoms, e.g., an octadecyl group, or an amino group or the like; ion exchange resin comprising synthetic polymer such as polystyrene and polyvinyl; carbon and column packings comprising natural polymer or the like have been used. Silica gel has been used for separating lipid related materials as column packings for adsorption chromatography utilizing excellent adsorption performances of silanol groups existing in a large number on internal surfaces of pores. However, silica gel may be easily dissolved in water and has a very low resistance to high pH eluent. Thus, other packing material is used for separating samples using such eluent. Porous packing materials are also known and have been prepared from porous silica, chemically modified porous silica, porous polymers, etc.

When the sample is carried through the column along with the mobile phase, the various components of interest in the sample migrate through the packing within the column at different rates (i.e., there is differential migration of the components) resulting from interactions of component molecules with the surface of the packing material. Such interactions, for example, can be diffusion, dispersion, ionic, dipole, and so forth. In other words, the various components in a sample will move through the column at different rates. Because of the different rates of movement, the components gradually separate as they move through the column. Differential migration is affected by factors such as the composition of the mobile phase, the composition of the stationary phase (i.e., the material with which the column is packed), and the temperature at which the separation takes place. Thus, such factors will influence the separation of the sample's various components. A more detailed description of the separation process can be found, among others, in "Liquid Chromatography Theory" by R. P. W. Scott, John Wiley & Sons, 1992.

In addition to the above parts, an LC system will often include filters, check valves, or the like in order to prevent contamination of the sample or damage to the LC system. Many different types of LC systems and components for LC systems are commercially available from a number of vendors. For example, Millipore Corporation of Milford, Mass., Beckman Instruments of Fullerton, Calif., and Agilent Technologies, Inc., of Palo Alto, Calif., all sell LC systems, including pumps, sample injection valves, columns, and detectors, among other things. In addition, various columns with various packings are commercially available from a variety of sources, including (among others) Agilent Technologies, Inc., of Palo Alto, CA, Baxter Healthcare Corporation of Deerfield, Ill., Supelco of Bellafonte, Penn., and Alltech Associates, Inc., also of Deerfield, Ill.

Most LC systems include pumps, which can generate relatively high pressures of up to around 6,000 psi. In many situations, an operator can obtain successful results by operating an LC system at "low" pressures of anywhere from just a few psi or so up to 1,000 psi or so. More often than not, however, an operator will find it desirable to operate an LC system at relatively "higher" pressures of over 1,000 psi.

### Concentration Devices

In accordance with embodiments of the present invention, effluent leaving a separation column, which comprises fractions with separated components of interest, is passed into a concentration device in accordance with embodiments of the present invention comprising a hollow element disposed within a hollow liner.
The Hollow Element: The hollow element comprises a wall having an exterior surface and an interior surface defining an interior region. In some embodiments the hollow element is disposed parallel axially in the non-porous hollow liner to provide a gap region between the exterior or outer surface of the hollow element and the interior surface of the hollow liner. At least a portion of the wall of the hollow element is porous. By the phrase "at least a portion" means that the entire wall surface need not be porous but sufficient wall surface should be porous to achieve the desired concentration of a component of interest in a fraction of the effluent. In many embodiments the effluent is passed into an interior region of a hollow element. The term "non-porous" means that fluid in the interior of the hollow liner is not able to pass through the wall of the hollow liner to any significant degree.

As mentioned above, the hollow element comprises an inner surface and an outer surface and should comprise at least a portion that is porous. One consideration is having a porous region that provides sufficient concentration of a component of interest in a fraction of effluent so that detection of the component of interest is improved in sensitivity, resolution, and the like in a particular analysis. Usually, at least about 10 %, at least about 30 %, at least about 50 %, or at least about 75 %, or at least about 90 %, or at least about 99%, or the entire hollow element is porous. The phrase "at least about" means that the porous region of the wall is equal to or greater than the designated percentage and that the designated percentage may vary by plus or minus one percent. The size of the pores should be sufficient to permit molecules of liquid medium to pass through the device from the inner surface to the outer surface and to prevent components of interest from passing through the pores. The size of pores of the hollow element is about 1,000 molecular weight (MW) cutoff to about 10 microns, about 1,000 MW cutoff to about 5 microns, about 1,000 MW cutoff to about 4 microns, or about 1,000 MW cutoff to about 3 microns. The internal diameter of the hollow element is about 5 to about 2,000 microns, about 10 to about 1,000 microns, about 10 to about 700 microns, or about 20 to about 500 microns.

The hollow element can be manufactured from a number of materials. The hollow element should have sufficient integrity to withstand the separation conditions of embodiments of the present methods. The material from which the hollow element is constructed should be compatible with most analytes. Of particular interest are the polypeptide, the polypeptide fragments, the digestion medium including the digestion agent and any other ancillary materials such as, for example, digestion buffers, reducing agents and the like. The materials may be synthetic or natural or a combination of both. Materials include polymers, plastics including, e.g., polyesters, polyamides, etc., resins, polysaccharides such as, e.g., cellulose, cellulose esters such as nitrocellulose and the like, silica or silica-based materials, ceramics, clay/earth, carbon, metals including metal alloys, metal oxides, inorganic glasses, and so forth. Particular plastics finding use include, for example, polyethylene (PE), polypropylene (PP), such as high density polypropylene, polytetrafluoroethylene (PTFE), e.g., TEFLON®, polyethersulfone, PVDF, polymethylmethacrylate, polycarbonate, polyethylene terephthalate, polystyrene or styrene copolymers, polyurethanes, polyesters, polycarbonates, polyureas, polyamides, polyethyleneamines, polyarylene sulfides, polysiloxanes, polydimethylsiloxanes, polyimides, polyacetates, poly etheretherketone (PEEK), and the like. Metals include, for example, stainless steel, hastalloy, platinum, gold, silver, titanium, and so forth.

The shape of the hollow element may be, for example, circular, square, rectangular, elliptical, triangular, pentagonal, hexagonal and the like when viewed in the cross-section. In some embodiments the hollow element is tubular. In some embodiments the hollow element is a cylindrical device. The hollow element may be straight or curved, usually straight. For a curved element the angle of curvature is about 1 to about 90 degrees from an axis projected from the plane at one end of the element. The shape of the element is usually a matter of design and mechanical considerations.

The dimensions of hollow element may vary over the cross-section of the element from one point to another. For example, the cross-sectional dimension adjacent one end of the hollow element may be less than that adjacent the other end of such element. This configuration results in a tapered hollow element. On the other hand, for example, the cross-sectional dimensions at the ends of the element may be larger or smaller than the cross-sectional dimensions at the middle of the element. In general, the inner cross-sectional dimensions of the hollow element vary no more than about 80 %, no more than about 50 %, no more than about 30 %, no more than about 20 %, no more than about 10 %, no more than about 5 %, from one point to another along the length of the element. In many embodiments the inner cross-sectional dimension of the hollow element does not vary to any significant degree, i.e., no more than about 1%.

The length of the hollow element is dependent on a number of considerations. The length is usually based on the convenience of providing the hollow element as part of a digestion device that is on-line with other components of an apparatus as discussed below. The length is also dependent on providing an adequate digestion region as discussed below. In some embodiments the length of the hollow element is about 0.1 mm to about 10,000 mm, about 0.5 mm to about 1,000 mm or about 1 to about 500 mm. Conveniently, the length of the hollow element may be selected based on the commercially available products.

The thickness of the wall of the hollow element is dependent on a number of factors. One consideration is achieving an adequate separation of the peptide fragments from larger molecules. Another consideration is the structural or mechanical integrity or stability of the hollow element. The thickness of the wall of the hollow element is about 1 to about 10,000 microns, about 5 to about 5,000 microns, about 5 to about 1,000 microns, about 10 to about 1,000 microns, about 30 to about 600 microns, and so forth.

In a specific embodiment the hollow element is a hollow fiber membrane. The term "hollow fiber membrane" means an extremely small tube or fiber having an internal diameter of between about 5 to about 2,000 microns, about 10 to about 1,000 microns, about 10 to about 700 microns, or about 20 to about 500 microns. The outer diameter of the hollow fiber membrane depends on the internal diameter of the membrane and is generally less than about 3000 microns, less than about 2000 microns, or less than about 1000 microns. The hollow fiber membrane is constructed of any material suitable for hollow fiber membranes such as, for example, polyethylene, polyethersulfone, PVDF, and the like. The particular material chosen is dependent on the nature of the mobile phase, separated effluent, and mechanical strength vs pH, and so forth. The hollow fiber membrane should be chosen with a pore size sufficient to realize the aforementioned separation. The pore size of the hollow fiber membrane is about 1,000 MW cutoff to about 10 microns, about 1,000 MW cutoff to about 5 microns, about 1,000 MW cutoff to about 4 microns, or about 1,000 MW cutoff to about 3 microns. The wall thickness of the hollow fiber membrane is about 1 to about 1,000 microns, about 5 to about 1,000 microns, about 10 to about 1,000 microns. Suitable hollow fiber membranes include, by way of illustration and not limitation, PES, PVDF, PP, PE, and the like.

The Hollow Liner: As mentioned above, the concentration device comprises a hollow element disposed in a non-porous hollow liner to provide a gap region. In many embodiments the hollow liner has two ends. Each of the two ends has at least two independent fluid communication ports. One of the fluid communication ports at each end is connected to the beginning of the interior of the hollow element. At least one of the fluid communication ports is connected to the gap region at a position preferably close to the corresponding end of the hollow liner. In some embodiments the hollow element is disposed parallel axially in the hollow liner. The phrase "parallel axially" means that the cylindrical axis of the hollow element follows the contour of the cylindrical axis of the hollow liner. In some embodiments the cylindrical axis of the hollow element is parallel to the cylindrical axis of the hollow liner. A specific embodiment of parallel axially is coaxially where the cylindrical axes are the same for the hollow element and the hollow liner. In some embodiments, alignment of the axes may vary from coaxial by no more than about 50 %, by no more than about 40 %, by no more than about 30 %, by no more than about 20 %, by no more than about 15 %, by no more than about 10 % by no more than about 5 %, or by no more than about 1 %.

The hollow element is disposed within the hollow liner. The shapes of the hollow element and the hollow liner are generally the same but need not be. The shape and axial alignment of each should allow the formation of a gap region between an inner wall of the hollow liner and an outer wall of the hollow element. In some embodiments the dimensions of the gap region should be sufficient to provide for efficient removal of the molecules of liquid effluent exiting the pores of the hollow element. One or more hollow elements may be disposed within the hollow liner. For example, a hollow fiber bundle may be employed as the hollow element. The hollow elements are disposed such that each interior region of the hollow element would be in fluid communication with a single conduit that would receive the concentrated fractions of liquid effluent comprising respective components of interest and provide a means to communicate the effluent to a component of an analysis apparatus as discussed below. Alternatively, each interior region of the hollow elements separately communicates with such a component. In these embodiments, the outer surfaces of the hollow elements and the inner wall of the hollow liner form the gap region.

The thickness of the wall of the hollow liner is dependent on a number of factors. One consideration is the structural or mechanical integrity or stability of the hollow liner, which must be sufficiently thick to maintain the integrity of the gap region. Structural integrity is also related to the nature of the material from which the hollow liner is manufactured. The thickness of the wall of the hollow liner is about 10 to about 5000 microns, about 10 to about 2000 microns, about 10 to about 1000 microns, about 10 to about 500 microns, and so forth.

The hollow liner can be manufactured from a number of materials. Many of the considerations that apply to construction material for the hollow element mentioned above apply equally to the hollow liner.

The inner dimensions of the hollow liner are sufficient to permit the hollow element to be disposed therein and to permit the formation of the desired gap region. The hollow liner accordingly has an inner cross-sectional dimension that accommodates the hollow element. The distance between the outer wall of the hollow element and the inner wall of the hollow liner element defines the gap region. In general, this distance is related to volume of the gap region needed for adequately carrying out the removal of effluent molecules. In many instances the distance between the above walls is about 1 to about 2,500 microns, about 5 to about 1000 microns, or about 10 to about 500 microns. In some embodiments the length of the hollow liner is sufficient to contain the hollow element. Usually, the length of the hollow liner is co-terminal with the length of the hollow element. In some embodiments the length of the hollow element is greater than that of the hollow liner so that the hollow element extends beyond the hollow liner. The hollow element is disposed within the hollow liner in such a way as to avoid any contamination of the effluent.

In some embodiments both end sections of the hollow element are pot-sealed, for example, by adhesive within the hollow liner to form the digestion region and the interior of the hollow element where no fluid communication can occur between the two except through the pores (lumens) of the hollow element. The hollow element and the hollow liner may be positioned with respect to each other by suitable spacers such as spacing rods, strips, posts and the like, O-rings, and so forth, made of ceramic, glass, polyimide, Teflon®, rubber, adhesive, and the like.

Enhancement of Concentration of Components: Permeation rate of the liquid molecules of effluent through the pores of the hollow element may be enhanced by employing a vacuum, a purge gas flow, an auxiliary liquid flow, or the like. Suitable inlet and/or outlet ports in the hollow liner may be employed for this purpose. Where a vacuum is employed, the vacuum is that sufficient to enhance the permeation rate and removal of the permeated liquid effluent. In some embodiments the percentage of enhancement of the permeation rate and removal, measured as volume of final effluent flow over the volume of initial effluent flow, should be at least about 5%, at least about 10%, at least about 15%, at least about 20%, at least about 25%, at least about 30%, at least about 40%, at least about 50%, or more. In some embodiments the vacuum is about 0.1 torr to about 720 torr, about 1 torr to about 720 torr, about 10 torr to about 720 torr, about 50 torr to about 720 torr, about torr 100 to about 720 torr, and so forth. Any suitable vacuum source as known in the art or as may be developed may be used in this aspect of the invention.

A purge gas flow may be also employed to enhance concentration. The purge gas flow is introduced in the gap region, i.e., between the outside of the hollow element and the inside the hollow liner from one port at one end of the hollow liner. The direction of the purge gas flow is not necessarily the same as the mobile phase flow. The purged gas-containing vapor of liquid molecules may exit at a corresponding port at the other end. The gas flow rate may be about 0.1 to 1,000 ml/minute, about 0.1 to 500 ml/minute, about 0.1 to 100 ml/minute, about 0.1 to 50 ml/minute. Suitable gases include inert gases such as nitrogen, helium, argon, or other noble gases, and the like.

Auxiliary liquid flow may be employed to enhance the permeation rate and removal of the liquid effluent molecules through osmosis flow over the hollow element wall. The auxiliary fluid may be different from the fluid of the effluent or it may be the same. Any suitable fluid may be employed as long as the purpose of enhancement of permeation and fluid removal is realized. The auxiliary fluid may be, for example, an alcohol (C1-C10) such as, e.g., methanol, ethanol, etc., acetonitrile, a hydrocarbon (C1-C10) such as, e.g., hexane, etc., a halogenated hydrocarbon (C1-C5) such as, e.g., methylene chloride, etc., an aromatic solvent such as, e.g., toluene, etc., or mixtures of the above, or aqueous solutions that include one or more of the above, and so forth. The direction of flow of the auxiliary fluid may be the same as or different from the direction of flow of the permeated fluid. Usually, the type of fluid and the direction of flow are selected to maximize the permeation rate and the rate of removal of the fluid effluent. In some embodiments the auxiliary fluid may be under a slight pressure such as, for example, about 0.1 to about 30 psi, about 0.1 to about 15 psi, about 0.1 to about 10 psi, about 0.1 to about 5 psi, about 0.1 to about 1 psi, and so forth. The pressure of the auxiliary liquid flow can be less than the mobile phase pressure inside the hollow fiber at the same location over the length direction. The pressure difference is dependent on the osmosis pressure to enhance a reverse osmosis effect. In some embodiments the percentage of enhancement of the permeation rate and removal, measured as the ratio of the flow out /flow in of the mobile phase inside the hollow element, should be at least about 95%, at least about 75%, at least about 50%, at least about 30%, at least about 20%, at least about 10%, at least about 5%, or less.

The manipulation of the auxiliary liquid and its pressure difference across the wall of the hollow element to enhance the reverse osmosis effect is based on the well-known osmosis phenomenon, i.e., water (or polar solvent) passage from one side of a semi-permeation membrane (herein the hollow element wall) to another side. In the case of osmosis, pure water molecules flow through the membrane from a high content region (namely, inside the hollow element when mobile phase is aqueous dominant) to the gap region between hollow element and the hollow liner, where less aqueous or water miscible solvent auxiliary flow is employed, e.g. alcohol, acetonitrile, or the like. In the case of reverse osmosis case, the pressure difference across membrane is higher than the osmosis pressure, resulting in water and less ionic strength effluent permeating across the membrane. However, in the reverse osmosis case, the mobile phase flow including the separated components can be introduced into the gap region (outside-in layout), which allows the effluent without salt into the interior region of the hollow element to achieve desalting. The liquid inside the hollow element can be pure water or aqueous dominant for desalting and drawing the desalinate solution out to the detector. The technique to maintain the pressure difference higher than the osmosis pressure is achieved by using flow restriction at the exit of flow over the gap region or other well-known techniques.

In some embodiments of the present methods, the reverse osmosis effect may be enhanced by using electric force (voltage/current) or manipulating an auxiliary liquid and its pressure. The reverse osmosis effect results in de-salting a mobile phase such as liquid effluents. De-salting of the effluent can contribute to improving the detection performance of a detector such as, for example, the efficiency of electrospray in mass spectrometry, baseline signal level in ultraviolet-visible UV-Vis range detection, and the like. The amount of electric force is dependent on the nature of the components of interest, the nature of the fluid effluent, and so forth. In some embodiments the amount of electric force is the potential difference across the hollow element.

Embodiments Utilizing Surface Modifications: As mentioned above, in some embodiments the interior surface of the hollow element may be modified to facilitate application of the present embodiments to components of interest of various molecular weights. The surface may be modified by covalent attachment or non-covalent attachment of the modifying material to the interior surface of the hollow element. The nature of the modifying material is related to the nature of the components of interest and in particular to the molecular weight of the components. The modifying material may be selected from any number of known surface modifying materials. Examples of surface modifying materials, by way of illustration and not limitation, include ion exchange resins, C8 or C18 coupling, polyethylene glycol, fluorine, polyglycol amine, polyvinyl alcohol, silica gel, and the like. The amount of surface modifying material is dependent on a number of factors such as, for example, the nature of the components of interest and their molecular weights, the surface interaction, electroosmosis ionic strength, and so forth. The amount of surface modifying material is about 5 to about 90 % of the surface area, about 10 to about 70 % of the surface area, about 15 to about 50 % of the surface area, and so forth.

Fluid Communication in Embodiments of Concentration Devices: In some embodiments the concentration device formed by the hollow element disposed in the hollow liner is configured or adapted so that the effluent (comprising the fractions comprising one or more separated components) in the interior of the hollow element may be passed out of the interior to another component of an analytic apparatus. Liquid effluent molecules pass through the pores of the porous wall of the hollow element to the gap region. Accordingly, the hollow element has at least one port for providing fluid communication between the interior of the hollow element and such a component. Furthermore, the hollow liner has one or more ports for introduction of vacuum, pressurized gas, auxiliary liquids, and the like. The phrase "at least one port" or "one or more ports" means that the number of ports may be one, two, three, four, and so forth.

Alternate Embodiments of Component Movement: The discussion above is primarily directed to embodiments wherein the concentration device formed by the hollow element disposed in the hollow liner is configured or adapted so that the effluent (comprising the fractions comprising one or more separated components) in the interior of the hollow element may be passed out of the interior to another component of an analytic apparatus. Liquid effluent molecules pass through the pores of the hollow element to the gap region (inside-out). However, in some embodiments the concentration device may be configured or adapted so that the effluent enters the gap region and is passed out of the gap region to another component of an analytic apparatus. Liquid effluent molecules pass through the pores of the hollow element to from the gap region to the interior of the hollow element (outside-in). In these latter embodiments the gap region may be packed with a packing material such as that discussed above for the interior of the hollow element. Furthermore, connectors, ports and so forth are configured to adapt the concentration device to these latter embodiments.

Concentration Devices with Packing Material: In accordance with some embodiments of the invention, the hollow element contains a packing material inside the hollow element. In other embodiments the gap region contains packing material. The packing material is disposed within the interior of the hollow element, which in some embodiments may include disposing the packing material in the pores of the hollow element. At least about 50%, at least about 55%, at least about 60%, at least about 65%, at least about 70%, at least about 75%, at least about 80%, at least about 85%, at least about 90%, at least about 95%, at least about 99%, or about 100% of the interior of the hollow element is filled with packing material, on a volume to volume basis. The packing material may be any chromatographic medium that achieves the purpose of balancing the permeation rate of the flow of the mobile phase and the maximizing of the concentration of the components of interest in the fluid medium in which the separated components of interest are present. In some embodiments the packing material may be any of the particulate chromatographic media mentioned above. In some embodiments, by way of illustration and not limitation, the packing material is silica-based particle or a polymer-based particle such as, for example, C 18, C8, or C4 polymers; silica particles; dendrimers; divinylbenzene based polymers or coplymers thereof with, e.g., polystyrene and the like; metal oxides of metals such as, for example, zirconia, titania, alumina, and the like; crosslinked dextrins; gels; ceramics; and the like, or combinations of two or more of the above. In some embodiments the packing material has a particle size suitable to pack into either the interior region of the hollow element or the porous wall. In some embodiments the packing material of the interior of the hollow element is used to further separate effluents from a separation column such as, e.g., an HPLC column or the like, or to change pressure difference across the wall of the hollow element such as, for example, from an interior pressure increase, or to alter permeation of liquid across the wall of the hollow element resulting from surface properties of packing medium and change of the permeation area, or combinations of two or more of the above.

Because the packing material in these embodiments is not used for chromatographic separation, the density of the packing material in the interior of the hollow element is less than that used in chromatographic columns. Typically, the packing density of the packing material (or the amount of packing material employed in these embodiments) is that sufficient to achieve a pressure difference across the wall of the hollow element higher than the osmosis pressure, to produce desired permeation or to block undesired permeation over the wall of the hollow element for molecules of interest in the effluent from a separation column by selectively manipulating surface charge or surface hydrophobicity, to control permeation flux by changing the surface tangential velocity inside the interior wall surface of the hollow element, or combinations of the above.

Although permeation rate cannot be changed since it is the molecular property and it depends on the wall porosity and the molecules and the liquids on both sides of the hollow element wall, the permeation flux can be manipulated from surface area, velocity, surface properties (charge, hydrophobicity), and the like. In some embodiments the percentage of permeation flux change for the molecules of interest, measured by the ratio of permeation flux with packing medium inside the interior region of the hollow element to the hollow element without packing medium, should be at least about 5%, at least about 10%, at least about 30%, at least about 50%, at least about 75%, at least about 90%, at least about 95%, or more.

The density of the packing material is dependent on the nature of the packing material and hollow element (for example, pore size, pore volume, mechanical strength, interior dimension and the like). In some embodiments the density of the packing material in the hollow element is about 1% to about 95%, about 5 to about 90%, about 10 to about 75%, about 15 to about 50%, of the maximum theoretical packing density. The maximum theoretical packing density is defined in terms of spatial occupation, not a mass density.

The size of the packing material is dependent on the nature of the packing material, the nature of the fluid medium, the nature of the components of interest, permeation rate, and so forth. The size of the packing material in cross-sectional dimension is about 0.01 to about 500 microns, about 0.01 to about 300 microns, about 0.01 to about 100 microns, about 0.01 to about 50 microns, about 0.01 to about 25 microns, and so forth.

### Post-Concentration Analysis of Components

In some embodiments once the effluent comprising components of interest that are now separated and concentrated in various fractions of the effluent leaves the column, it flows past a detector. The detector detects the presence of specific molecules or compounds that are the components of interest.

Embodiments of Detectors: Any suitable detector known in the art or otherwise available may be employed to detect the separated fragments and result in their identification. Examples of detectors include, by way of illustration and not limitation, mass spectrometer, Ultraviolet-visible spectrophotometer, immuno-based sensor, flame ionization detector, electron capture detector, pulse modulated single filament thermal conductivity detector, and so forth, and combinations thereof. The present apparatus is adapted for connection to a detector, or through an interface to a detector where the interface is, for example, chip LC columns, valves including multiport valves, switch valves, and the like. Connections may be realized employing connectors that are well known in the art.

Mass spectrometry is an analytical methodology used for quantitative chemical analysis of materials and mixtures of materials. In mass spectrometry, a sample of a material, usually an organic or inorganic or biomolecular sample, to be analyzed called an analyte is broken into electrically charged particles of its constituent parts in an ion source. The particles are typically molecular in size. Once produced, the analyte particles are separated by the spectrometer based on their respective mass-to-charge ratios. The separated particles are then detected and a mass spectrum of the material is produced. The mass spectrum is analogous to a fingerprint of the sample material being analyzed. The mass spectrum provides information about the masses and, in some cases, quantities of the various analyte ions that make up the sample. In particular, mass spectrometry can be used to determine the molecular weights of components and molecular fragments within an analyte. Additionally, to some extent mass spectrometry can identify molecular structure and sub-structure and components that form the structure within the analyte based on the fragmentation pattern when the material is broken into fragments. Mass spectrometry has proven to be a very powerful analytical tool in material science, chemistry and biology along with a number of other related fields.

Mass spectrometers employing ionization chambers, such as atmospheric pressure chemical ionization (APCI) chambers, have been demonstrated to be particularly useful for obtaining mass spectra from liquid or gaseous samples and have widespread application. Mass spectrometry (MS) is frequently used in conjunction with gas chromatography (GC) or liquid chromatography (LC), and combined GC/MS and LC/MS systems are commonly used in the analysis of analytes having a wide range of polarities and molecular weights. Combined LC/MS systems have been particularly useful for applications such as environmental monitoring, pharmaceutical analysis, industrial process and quality control, and the like.

Examples of detectors involving mass spectrometry that may be employed for detection of the separated components include electrospray ionization mass spectrometers (ESI-MS), atmospheric pressure chemical ionization mass spectrometers (APCI-MS), inductively coupled plasma mass spectrometers (ICP-MS) and glow discharge mass spectrometers (GDMS). In some embodiments, the detector may involve matrix assisted laser-desorption ionization mass spectrometry (MALDI). Other detectors involve ionization tandem mass spectrometry (ESI-MS/MS) (see, e.g., Karger et al., 1993, Anal Chem. 65: 900-906), ion cyclotron resonance ("ICR"), Fourier transform types and delayed ion extraction. Other suitable mass analyzers include magnetic sector/magnetic deflection instruments in single quadrupole, triple ("MS/MS") quadrupole, Fourier transform and time-of-flight ("TOF") configurations and the like. Combinations of the above may also be used such as, for example, hybrid instruments that combine MALDI with MS/MS, and the like. Other techniques include MALDI (matrix assisted laser desorption ionization) or ESI (Electrospray Ionization) coupled with Ion Trap, Triple Quadrupole or QTOF Mass Spectrometry Analyzers. Alternatively, high resolution Fourier transform ion cyclotron resonance (FTICR)-MS may be employed.

Embodiments Utilizing Internal Standards: In some embodiments the method also comprises adding an internal standard to the remaining liquid effluent in the interior region of the hollow element. The internal standard may be added at any time during the concentration method. The internal standard assists in obtaining more reliable and accurate quantitative results in some embodiments of the present methods. Appropriate valves and timers may be employed to introduce the internal standard at the desired time. Internal standard may be introduced into the gap region between the hollow element and the hollow liner and allowed to permeate into the interior of the hollow element and to be carried to the detector region by the mobile phase. Usually, the internal standard is introduced in such a manner and at such a time so that the fractions of effluent and the internal standard are detected by the detector at approximately the same time. In some embodiments the detector should detect the internal standard within about 1 to about 300 seconds, about 1 to about 100 seconds, about 1 to about 30 seconds, or so forth, of the detection of the components of interest. Suitable valves for introduction of the internal standard are well known in the art as well as suitable timers for controlling the introduction of the internal standard. The timers and valves are in communication with a computer that comprises software to control these functions. In this way the timers and valves are adapted to carry out the desired function. Examples of typical internal standards include peptide, bendroflumethiazide (BMFT), mass calibrants, and the like.

### Embodiments of Analysis Apparatus

Some embodiments of the present invention are directed to an apparatus for analyzing a sample containing components of interest such as, for example, biopolymer fragments. In some embodiments the apparatus comprises (a) a separation device for separating the components of interest such as, e.g., biopolymers or fragments thereof, (b) a concentration device in fluid communication with the separation device, the concentration device comprising a hollow element disposed in a non-porous hollow liner to provide a gap region therebetween wherein the hollow element comprises a wall having an exterior surface and an interior surface defining an interior region and wherein at least a portion of the wall is porous, and (c) a detection device in fluid communication with the concentration device. In some embodiments the detection device is in fluid communication with the interior of the concentration device while in other embodiments the detection device is in fluid communication with the gap region of the concentration device. In some embodiments at least a portion of the interior region comprises a particulate chromatographic medium. In some embodiments at least a portion of the gap region comprises a particulate chromatographic medium. In some embodiments, the hollow element is a hollow fiber or a bundle of hollow fibers.

The apparatus also may include connections of the system, which may comprise one or more of ports for introduction and removal of fluids, pumps including vacuum pumps, liquid pumps, and the like, gas lines, valves, drainage lines for undesired flow through material, detector inlets and outlets, HPLC columns, other columns, fractionate collectors, and so forth. The present apparatus also may be adapted for connection to a detector, either directly or through an interface such as a chip LC column, all of which are discussed above. Connection to a detector may be realized employing connectors that are well known in the art.

The components of the present apparatus are adapted to perform a specified function usually by a combination of hardware and software. This includes the structure of the particular component and may also include a microprocessor, embedded real-time software and I/O interface electronics to control a sequence of operations and so forth.

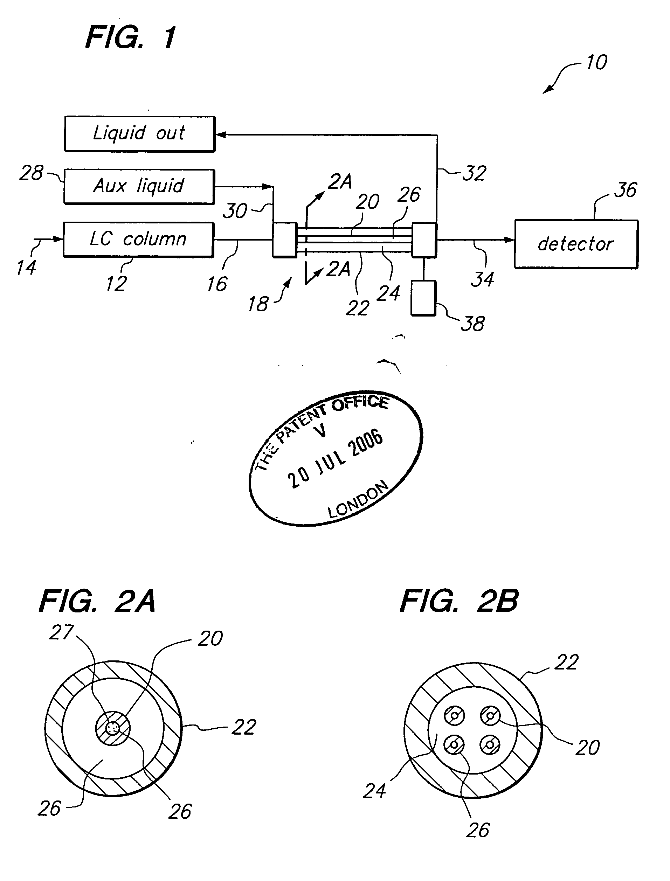

One embodiment of an apparatus, by way of illustration and not limitation, is depicted in Figs. 1 and 2A-2B. Apparatus 10 comprises separation device 12 for separating components of interest in a sample introduced into device 12 at arrow 14. In the embodiment depicted, device 12 is a liquid chromatography (LC) column. Effluent 16 passes from device 12 into the interior of concentration device 18, which in the embodiment shown comprises hollow fiber 20 (Fig. 2A), or a hollow fiber 20 bundle (Fig. 2B) disposed parallel axially within hollow liner 22 to form gap region 24. Hollow fiber 20 is disposed within hollow liner 22 in a sealed manner so that the only fluid (gas, vapor or liquid) communication that occurs between gap region 24 and interior region 26 of hollow fiber 20 is through the pores of hollow fiber 20. Interior region 26 of hollow fiber 20 comprises particulate chromatographic medium 27. Gap region 24 is in fluid communication with a low pressure miniature sampling circulating system 28 through lines 30 and 32, which respectively serve as inlet and outlet ports in hollow liner 22 to gap region 24 to introduce and remove an auxiliary liquid (Aux liquid). System 24 has a volume of about 500 microliters in this embodiment. Interior region 26 is in fluid communication through line 34 with detector 36. Apparatus also includes module 38, which comprises appropriate valves and timers for introducing an internal standard into gap region 24.

In operation, a sample such as, for example, a protein sample that has been digested into a mixture of fragments by known techniques is introduced into device 12, in which the fragments are separated by chromatographic techniques. Effluent 16 that exits from device 12 and comprises fractions each containing one or more, usually one, fragments of the digested protein. Effluent 16 is introduced into interior region 26 of hollow fiber 20. As effluent flows through interior region 26, molecules of liquid effluent pass through the pores of hollow fiber 20 into gap region 24. Auxiliary liquid is introduced from system 28 into gap region 26 to assist in the permeation and removal of the molecules of liquid effluent. In this way, the protein fragments are concentrated in the remaining effluent as it passes through line 34 to detector 36 where the separated fragments are detected and subsequently identified.

### Results of Analysis

One aspect of embodiments of the invention is the product of the above method, namely, the results of an analysis, which may be evaluated at the site of the testing or it may be shipped to another site for evaluation and communication to an interested party at a remote location if desired. By the term "remote location" is meant a location that is physically different than that at which the results are obtained. Accordingly, the results may be sent to a different room, a different building, a different part of city, a different city, and so forth. Usually, the remote location is at least about one mile, usually, at least ten miles, more usually about a hundred miles, or more from the location at which the results are obtained. The data may be transmitted by standard means such as, e.g., facsimile, mail, overnight delivery, e-mail, voice mail, and the like.

"Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data.

As used above, the phrase "at least" means that the indicated item is equal to or greater than that designated value and the term "about" means that the designated value may vary by plus or minus one percent.

All publications and patent applications cited in this specification are herein incorporated by reference as if each individual publication or patent application where specifically and individually indicated to be incorporated by reference.

Although embodiments of the foregoing invention have been described in some detail by way of illustration and example for purposes of clarity of understanding, it will be readily apparent to those of ordinary skill in the art in light of the teachings of this invention that changes and modifications may be made thereto without departing from the spirit or scope of the appended claims. Furthermore, the foregoing description, for purposes of explanation, used specific nomenclature to provide a thorough understanding of the invention. However, it will be appreciated that one skilled in the art that the specific details are not required in order to practice the invention. Thus, the foregoing descriptions of specific embodiments of the present invention are presented for purposes of illustration and description; they are not intended to be exhaustive or to limit the invention to the precise forms disclosed. Many modifications and variations are possible in view of the above teachings. The embodiments were chosen and described in order to explain the principles of the invention and its practical applications and to thereby enable others skilled in the art to utilize the invention.

The disclosures in United States patent application No. 11/200,709, from which this application claims priority, and in the abstract accompanying this application are incorporated herein by reference.

## Claims

**1.** A method of concentrating one or more components of interest in a fluid effluent, the method comprising:
(a) passing fluid effluent (16) comprising fractions comprising separated components of interest through a concentration device (18) comprising a hollow element (20) comprising a wall at least a portion of which is porous wherein the hollow element (20) is disposed in the interior of a hollow liner (22), and
(b) permitting fluid effluent molecules to permeate through the wall of the hollow element (20) so that component molecules are concentrated in remaining effluent, which exits the concentration device.

**2.** A method of analyzing for one or more components in a fluid effluent, the method comprising:
(a) passing fluid effluent (16) comprising fractions comprising separated components of interest through an interior region of a hollow element (20) comprising a wall with an exterior surface and an interior surface defining the interior region (26) wherein at least a portion of the wall is porous and wherein the hollow element is disposed in the interior of a hollow liner (22) to form a gap region (24),
(b) permitting fluid effluent molecules to permeate through the wall of the hollow element (20) from the interior surface into the gap region wherein component molecules are concentrated in remaining effluent, which moves through and out of the interior region, and
(c) detecting each component.

**3.** A method for analyzing for components in a sample, said method comprising:
(a) subjecting a medium comprising the sample to liquid chromatographic separation to obtain separated components wherein each of the separated components is present in liquid effluent,
(b) passing the liquid effluent (16) into an interior region (26) of a hollow fiber (20) wherein the hollow fiber is disposed parallel axially in the interior of a hollow liner (22) to form a gap region (24),
(c) permitting liquid effluent molecules to permeate through the wall of the hollow fiber from the interior region (26) to the gap region (24) wherein molecules of component are concentrated in remaining effluent, which moves through and out of the interior region, and
(d) detecting each component by mass spectrometry.

**3.** A method according to Claim 1 or Claim 2 wherein the hollow element (20) is a hollow fiber or a bundle of hollow fibers.

**4.** A method according to any preceding Claim wherein the hollow element or fiber is parallel axially disposed in the interior of the hollow liner.

**5.** A method according to Claim 1 wherein at least a portion of the concentration device (18) comprises a particulate chromatographic medium.

**6.** A method according to Claim 5 wherein the particulate chromatographic medium is a silica-based particle or a polymer-based particle or metal oxide particle.

**7.** A method according to Claim 2 or Claim 3 further comprising adding an internal standard to the remaining liquid effluent in the interior region of the hollow element.

**8.** A method according to any preceding Claim wherein the components are biopolymers or fragments thereof.

**9.** A method according to Claim 2 or Claim 3 wherein the detecting comprises mass spectrometry, ultraviolet-visible spectrophotometry or immuno-based sensor technology or a combination thereof.

**10.** An apparatus (10) for analyzing a sample containing biomolecules, said apparatus comprising:
(a) a separation device (12) for separating the biomolecules,
(b) a concentration device (16) in fluid communication with the separation device, the concentration device comprising a hollow element (20) disposed in a non-porous hollow liner (22) to provide a gap region (24) therebetween wherein the hollow element comprises a wall having an exterior surface and an interior surface defining an interior region (26) and wherein at least a portion of the wall is porous, and
(c) a detection device (36) in fluid communication with the interior region of the concentration device.

**11.** An apparatus according to Claim 10 wherein the hollow element is a hollow fiber or a bundle of hollow fibers.

**12.** An apparatus according to Claim 10 or 11 wherein at least a portion of the interior region comprises a particulate chromatographic medium.

**13.** An apparatus according to any one of Claims 10 to 12 further comprising a mechanism for adding an internal standard to the interior region of the hollow element.

**14.** An apparatus according to any one of Claims 10 to 13 wherein the separation device is a chromatograph.

**15.** An apparatus according to any one of Claims 10 to 14 wherein the detection device is a mass spectrometer, ultraviolet-visible spectrophotometry or immuno-based sensor technology or a combination thereof.

**16.** An apparatus according to any one of Claims 10 to 15 wherein the hollow element is disposed parallel axially in the hollow liner.
